# EUROPEAN PATENT APPLICATION

(11) **EP 4 685 216 A1**
(43) Date of publication of application: **28.01.2026**
(21) Application number: 24774473.3
(22) Date of filing: 06.02.2024
(51) Int. Cl.: C10M 137/12, C10M 169/04, C10M 101/02, C10M 105/38, C10M 107/24, C10M 107/34, C10N 30/06, C10N 30/08, C10N 40/30

(54) **REFRIGERATOR OIL COMPOSITION, AND COMPOSITION FOR REFRIGERATORS**

(30) Priority: 23.03.2023 JP 2023046886
(71) Applicant: Idemitsu Kosan Co.,Ltd., Tokyo 100-8321 (JP)
(72) Inventor: YOSHIDA Kohei, Tokyo 100-8321 (JP); NAKAJIMA So, Tokyo 100-8321 (JP)
(74) Representative: Hoffmann Eitle
(86) International application number: PCT/JP2024/003804
(87) International publication number: WO 2024/195327

(57) **Abstract**

Provided is a refrigerator oil composition excellent in wear resistance, seizure resistance, and heat stability, the refrigerator oil composition including a base oil (A) and a phosphonic acid ester (B) represented by the following general formula (1): 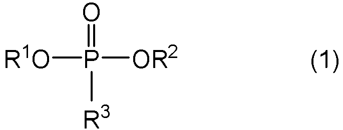 wherein R¹ and R² each independently represent a hydrocarbon group having 1 to 8 carbon atoms, and R³ represents a hydrocarbon group having 9 to 40 carbon atoms that may have a hydroxy group as a substituent.

## Description

### Technical Field

The present invention relates to a refrigerator oil composition and a composition for a refrigerator.

### Background Art

A refrigerator such as a compression-type refrigerator generally has a structure which includes at least a compressor, a condenser, an expansion mechanism (e.g., an expansion valve), and an evaporator and in which a mixture of a refrigerant and a refrigerator oil (hereinafter also referred to as "composition for a refrigerator") circulates in a closed system.

A hydrofluorocarbon compound having a low environmental load has started to be used as a refrigerant to be used in the compression-type refrigerator instead of a hydrochlorofluorocarbon (HCFC) that has heretofore been frequently used. As the hydrofluorocarbon compound, saturated hydrofluorocarbon compounds (Hydro-FluoroCarbons; hereinafter also referred to as "HFCs"), such as 1,1,1,2-tetrafluoroethane (R134a), difluoromethane (R32), and a mixture of difluoromethane and pentafluoroethane (R410A), are used in many cases.

In addition, the use of unsaturated hydrofluorocarbon compounds (Hydro-Fluoro-Olefins; hereinafter also referred to as "HFOs") each having a low global warming potential, such as 1,3,3,3-tetrafluoropropene (R1234ze) and 2,3,3,3-tetrafluoropropene (R1234yf), has been investigated.

The refrigerator oil is blended with various additives for the purpose of improving the lubrication performance of the refrigerator oil. Among them, tricresyl phosphate (hereinafter also referred to as "TCP") has heretofore been used as an additive for improving the wear resistance and seizure resistance of the refrigerator oil.

In addition, in each of, for example, PTLs 1 and 2, there is a disclosure of a refrigerator oil blended with a phosphonic acid ester as a phosphorus-based extreme-pressure agent.

### Citation List

### Patent Literature

PTL 1: WO 2018/021533 A1
PTL 2: WO 2020/171135 A1

### Summary of Invention

### Technical Problem

However, a demand for an improving effect on the wear resistance of a refrigerator oil has been growing more and more, and hence there has been required an additive that can improve the wear resistance and seizure resistance thereof to a larger extent than TCP and the phosphonic acid ester specifically described in each of the above-mentioned patent literatures do.

In addition, the inventors of the present invention have found that when a lubricating oil composition containing TCP is used as a refrigerator oil, there occurs a problem in that the acid value of the lubricating oil composition increases under high temperatures. The problem is remarkable particularly when an unsaturated hydrofluorocarbon compound (Hydro-Fluoro-Olefin; hereinafter also referred to as "HFO") having a low global warming potential, such as 1,3,3,3-tetrafluoropropene (R1234ze) or 2,3,3,3-tetrafluoropropene (R1234yf), is used as a refrigerant. Accordingly, the alleviation of the problem has been desired.

The present invention has been made in view of the above-mentioned problem, and an object of the present invention is to provide a refrigerator oil composition excellent in wear resistance, seizure resistance, and heat stability.

### Solution to Problem

The inventors of the present invention have made extensive investigations, and as a result, have found that a refrigerator oil composition including a base oil and a specific phosphonic acid ester can solve the above-mentioned problem. Thus, the inventors have completed the present invention. The present invention has been completed on the basis of such finding. That is, according to the respective embodiments of the present invention, there are provided the following items [1] to [10].
[1] A refrigerator oil composition, comprising: a base oil (A); and a phosphonic acid ester (B) represented by the following general formula (1): 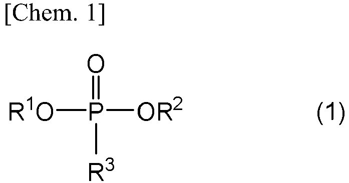 wherein R¹ and R² each independently represent a hydrocarbon group having 1 to 8 carbon atoms, and R³ represents a hydrocarbon group having 9 to 40 carbon atoms that may have a hydroxy group as a substituent.
[2] The refrigerator oil composition according to the above-mentioned item [1], wherein a content of the phosphonic acid ester (B) is from 200 ppm by mass to 4,000 ppm by mass in terms of phosphorus atom with respect to a total amount of the refrigerator oil composition.
[3] The refrigerator oil composition according to the above-mentioned item [1] or [2], wherein in the general formula (1), R¹ and R² each represent an alkyl group having 1 to 4 carbon atoms or an alkenyl group having 2 to 4 carbon atoms, and R³ represents a hydrocarbon group having 12 to 30 carbon atoms.
[4] The refrigerator oil composition according to any one of the above-mentioned items [1] to [3], wherein in the general formula (1), R³ represents a linear or branched alkyl group or alkenyl group having 14 to 24 carbon atoms, or a group represented by the following general formula (2): 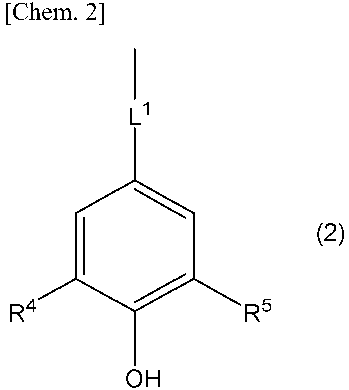 wherein L¹ represents a single bond, -CH₂-, or -CH₂CH₂-, and R⁴ and R⁵ each independently represent a hydrocarbon group having 2 to 10 carbon atoms.
[5] The refrigerator oil composition according to any one of the above-mentioned items [1] to [4], wherein the base oil (A) contains one or more kinds selected from the group consisting of: a polyalkylene glycol (PAG); a polyvinyl ether (PVE); a polyol ester (POE); and a mineral oil.
[6] The refrigerator oil composition according to any one of the above-mentioned items [1] to [5], further comprising an antioxidant (C).
[7] The refrigerator oil composition according to any one of the above-mentioned items [1] to [6], further comprising an acid scavenger (D).
[8] The refrigerator oil composition according to any one of the above-mentioned items [1] to [7], further comprising one or more kinds selected from the group consisting of: an oiliness improver; a copper deactivator; a rust inhibitor; an antifoaming agent; and a viscosity index improver.
[9] A composition for a refrigerator, comprising: the refrigerator oil composition of any one of the above-mentioned items [1] to [8]; and a refrigerant.
[10] The composition for a refrigerator according to the above-mentioned item [9], wherein the refrigerant contains one or more kinds selected from the group consisting of: an unsaturated hydrofluorocarbon refrigerant; a saturated hydrofluorocarbon refrigerant; a hydrocarbon-based refrigerant; carbon dioxide; and ammonia.
[11] The composition for a refrigerator according to the above-mentioned item [10], wherein the refrigerant contains an unsaturated hydrofluorocarbon compound.
[12] A method of producing a refrigerator oil composition, comprising a step of mixing a base oil (A) and a phosphonic acid ester (B) represented by the following general formula (1): 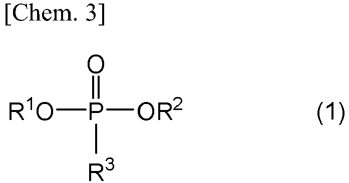 wherein R¹ and R² each independently represent a hydrocarbon group having 1 to 8 carbon atoms, and R³ represents a hydrocarbon group having 9 to 40 carbon atoms that may have a hydroxy group as a substituent.

### Advantageous Effects of Invention

According to the present invention, the refrigerator oil composition excellent in wear resistance, seizure resistance, and heat stability can be provided.

### Description of Embodiments

In this description, lower limit values and upper limit values described in stages for a preferred numerical range (e.g., the range of a content or the like) may be independently combined with each other. For example, a "preferred lower limit value (10)" and a "more preferred upper limit value (60)" taken out of the description "preferably from 10 to 90, more preferably from 30 to 60" may be combined to produce the range of "from 10 to 60." Similarly, in this description, numerical values accompanied by the terms "or more," "or less," "less than," and "more than" related to the description of a numerical range are numerical values that may be freely combined.

The term "hydrocarbon group" as used herein means a group including only a carbon atom and a hydrogen atom unless otherwise stated. The "hydrocarbon group" includes an "aliphatic group" including a straight chain or a branched chain, an "alicyclic group" having one or more saturated or unsaturated carbon rings that are each free of aromaticity, and an "aromatic group" having one or more aromatic rings each showing aromaticity such as a benzene ring.

The term "number of ring-forming carbon atoms" as used herein represents the number of carbon atoms among atoms for forming the ring itself of a compound having a structure in which its atoms are bonded in a ring manner. When the ring is substituted with a substituent, carbon in the substituent is not included in the number of ring-forming carbon atoms.

In addition, the number of ring-forming atoms represents the number of the atoms for forming the ring itself of the compound having a structure in which its atoms are bonded in a ring manner. An atom that does not form the ring (e.g., a hydrogen atom that terminates a bonding site of an atom for forming the ring) and an atom in a substituent when the ring is substituted with the substituent are not included in the number of ring-forming atoms.

The term ""a" to "b" carbon atoms" in the expression "substituted or unsubstituted X group having "a" to "b" carbon atoms" as used herein represents the number of carbon atoms when the X group is unsubstituted, and the number of the carbon atoms of a substituent when the X group is substituted is not included therein.

### [Refrigerator Oil Composition]

A refrigerator oil composition according to an embodiment of the present invention is a refrigerator oil composition, including: a base oil (A); and a phosphonic acid ester (B) represented by the following general formula (1): 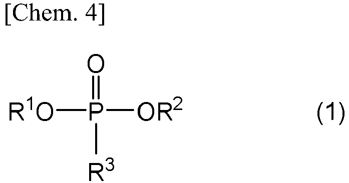 wherein R¹ and R² each independently represent a hydrocarbon group having 1 to 8 carbon atoms, and R³ represents a hydrocarbon group having 9 to 40 carbon atoms that may have a hydroxy group as a substituent.

The inventors of the present invention have made an investigation on an additive that can improve the wear resistance of a refrigerator oil, and as a result, have found that a refrigerator oil composition including a phosphonic acid ester represented by the general formula (1), the ester having a group having a relatively small number of carbon atoms as each of R¹ and R², and having a group having a relatively large number of carbon atoms as R³, exhibits excellent wear resistance and excellent seizure resistance, and shows satisfactory heat stability.

Meanwhile, when a phosphonic acid ester having a group having 8 or less carbon atoms as R³ was used, sufficient improving effects on the wear resistance and seizure resistance of the refrigerator oil were not obtained.

Thus, the inventors of the present invention have found that the phosphonic acid ester (B) represented by the general formula (1) exhibits improving effects on the wear resistance, seizure resistance, and heat stability of a composition for a refrigerator.

In the refrigerator oil composition of this embodiment, the total content of the component (A) and the component (B) is preferably from 80 mass% to 100 mass%, more preferably from 85 mass% to 100 mass%, still more preferably from 90 mass% to 100 mass%, still further more preferably from 95 mass% to 100 mass% with respect to the total amount (100 mass%) of the refrigerator oil composition.

The respective components to be blended into the refrigerator oil composition of this embodiment are described below.

### <Base Oil (A)>

The refrigerator oil composition of this embodiment includes the base oil (A).

In the refrigerator oil composition of this embodiment, the content of the base oil (A) is preferably 85.0 mass% or more, more preferably 90.0 mass% or more, still more preferably 95.0 mass% or more with respect to the total amount (100 mass%) of the refrigerator oil composition. In addition, the content is preferably 99.7 mass% or less, more preferably 99.3 mass% or less, still more preferably 99.0 mass% or less. Those lower limit values and upper limit values may be freely combined. Specifically, the content is preferably from 85.0 mass% to 99.7 mass%, more preferably from 90.0 mass% to 99.3 mass%, still more preferably from 95.0 mass% to 99.0 mass%.

For example, one or more kinds selected from the group consisting of: a synthetic oil; and a mineral oil may each be used as the base oil (A).

From the viewpoint of improving the heat stability of the refrigerator oil composition, one or more kinds of base oils (hereinafter also referred to as "base oil (A1)") selected from the group consisting of: a polyalkylene glycol (hereinafter also referred to as "PAG"); a polyvinyl ether (hereinafter also referred to as "PVE"); a polyol ester (hereinafter also referred to as "POE"); and a mineral oil are each preferably incorporated as the base oil (A). From the viewpoint of improving the compatibility of the refrigerator oil composition with a refrigerant, the viewpoint of improving the hydrolysis resistance thereof, and the viewpoint of improving the heat stability of the refrigerator oil composition, one or more kinds of base oils (hereinafter also referred to as "base oil (A2)") selected from the group consisting of: the PVE; and the PAG are each more preferably incorporated. From the viewpoint of improving the compatibility with the refrigerant, the viewpoint of improving the hydrolysis resistance, and the viewpoint of further improving the heat stability of the refrigerator oil composition, the PAG (hereinafter also referred to as "base oil (A3)") is still more preferably incorporated.

The PVE, the PAG, the POE, and the mineral oil are described in detail below.

### (Polyvinyl Ether (PVE))

The PVE only needs to be a polymer having one or more kinds of vinyl ether-derived constituent units.

When the base oil (A) contains the PVE, the PVEs may be used alone or in combination thereof.

From the viewpoint of the compatibility of the refrigerator oil composition with a refrigerant, the PVE is preferably a polymer having one or more kinds of vinyl ether-derived constituent units and having, in a side chain thereof, an alkyl group having 1 to 4 carbon atoms. From the viewpoint of further improving the compatibility with the refrigerant, the alkyl group is preferably a methyl group or an ethyl group, more preferably a methyl group.

The PVE is preferably a polymer (A-1) having one or more kinds of constituent units each represented by the following general formula (A-1):

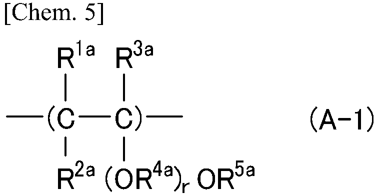

wherein
in the formula (A-1), R^{1a}, R^{2a}, and R^{3a} each independently represent a hydrogen atom or a hydrocarbon group having 1 to 8 carbon atoms, R^{4a} represents a divalent hydrocarbon group having 2 to 10 carbon atoms, R^{5a} represents a hydrocarbon group having 1 to 10 carbon atoms, and "r" represents the number of repeating units each represented by OR^{4a}, and represents a number of from 0 to 10, preferably a number of from 0 to 5, more preferably a number of from 0 to 3, still more preferably 0. When a plurality of OR^{4a}s are present in the constituent unit represented by the general formula (A-1), the plurality of OR^{4a}s may be identical to or different from each other.

Examples of the hydrocarbon group having 1 to 8 carbon atoms represented by each of R^{1a}, R^{2a}, and R^{3a} include: alkyl groups, such as a methyl group, an ethyl group, a n-propyl group, an isopropyl group, a n-butyl group, an isobutyl group, a *sec-*butyl group, a *tert*-butyl group, various pentyl groups, various hexyl groups, various heptyl groups, and various octyl groups; cycloalkyl groups, such as a cyclopentyl group, a cyclohexyl group, various methylcyclohexyl groups, various ethylcyclohexyl groups, and various dimethylcyclohexyl groups; aryl groups, such as a phenyl group, various methylphenyl groups, various ethylphenyl groups, and various dimethylphenyl groups; and arylalkyl groups, such as a benzyl group, various phenylethyl groups, and various methylbenzyl groups.

Herein, the term "various" refers to "linear, branched, or cyclic" hydrocarbon groups, and for example, the term "various butyl groups" refers to various butyl groups, such as "a *n-*butyl group, a *sec*-butyl group, an isobutyl group, a *tert*-butyl group, and a cyclobutyl group." In addition, the term "various" means that a group having a cyclic structure includes regioisomers, such as an ortho isomer, a meta isomer, and a para isomer. The same applies to the following.

The number of the carbon atoms of the hydrocarbon group represented by each of R^{1a}, R^{2a}, and R^{3a} is preferably from 1 to 6, more preferably from 1 to 3.

R^{1a}, R^{2a}, and R^{3a} each independently represent preferably a hydrogen atom or an alkyl group having 1 to 8 carbon atoms, more preferably a hydrogen atom or an alkyl group having 1 to 3 carbon atoms.

Examples of the divalent hydrocarbon group having 2 to 10 carbon atoms represented by R^{4a} include: divalent aliphatic groups, such as an ethylene group, a 1,2-propylene group, a 1,3-propylene group, various butylene groups, various pentylene groups, various hexylene groups, various heptylene groups, various octylene groups, various nonylene groups, and various decylene groups; divalent alicyclic groups, such as cyclohexane, methylcyclohexane, ethylcyclohexane, dimethylcyclohexane, and propylcyclohexane; divalent aromatic groups, such as various phenylene groups, various methylphenylene groups, various ethylphenylene groups, various dimethylphenylene groups, and various naphthylene groups; divalent alkyl aromatic groups each having a monovalent bonding site at each of the alkyl group moiety and aromatic moiety of an alkyl aromatic hydrocarbon, such as toluene, xylene, and ethylbenzene; and divalent alkyl aromatic groups each having bonding sites at the alkyl group moieties of a polyalkyl aromatic hydrocarbon, such as xylene and diethylbenzene.

The number of the carbon atoms of the hydrocarbon group represented by R^{4a} is preferably from 2 to 6, more preferably from 2 to 4.

R^{4a} preferably represents a divalent aliphatic group having 2 to 10 carbon atoms, more preferably a divalent aliphatic group having 2 to 4 carbon atoms.

Examples of the hydrocarbon group having 1 to 10 carbon atoms represented by R^{5a} include: alkyl groups, such as a methyl group, an ethyl group, a *n*-propyl group, an isopropyl group, a *n*-butyl group, an isobutyl group, a *sec-*butyl group, a *tert*-butyl group, various pentyl groups, various hexyl groups, various heptyl groups, various octyl groups, various nonyl groups, and various decyl groups; cycloalkyl groups, such as a cyclopentyl group, a cyclohexyl group, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphtyl groups; and arylalkyl groups, such as a benzyl group, various phenylethyl groups, various methylbenzyl groups, various phenylpropyl groups, and various phenylbutyl groups.

The number of the carbon atoms of the hydrocarbon group represented by R^{5a} is preferably from 1 to 8, more preferably from 1 to 6.

From the viewpoint of further improving the compatibility of the refrigerator oil composition with a refrigerant, R^{5a} represents preferably an alkyl group having 1 to 6 carbon atoms, more preferably an alkyl group having 1 to 4 carbon atoms, still more preferably a methyl group or an ethyl group, still further more preferably a methyl group.

The number (polymerization degree) of the constituent units each represented by the general formula (A-1) is appropriately selected in accordance with a kinematic viscosity that the base oil (A) is required to have.

In addition, the polymer having the constituent unit represented by the general formula (A-1) may be a homopolymer having only one kind of the constituent unit, or may be a copolymer having two or more kinds of the constituent units. When the polymer is a copolymer, the form of the copolymerization is not particularly limited, and may be any one of a block copolymer, a random copolymer, and a graft copolymer.

In addition, the PVE may include a polyalkylene glycol structure in its structure, but is preferably free of any polyalkylene glycol structure.

A monovalent group derived from, for example, a saturated hydrocarbon, an ether, an alcohol, a ketone, an amide, or a nitrile may be introduced into a terminal portion of the polymer (A-1). One terminal portion of the polymer (A-1) is preferably a group represented by the following general formula (A-1-i) among them:

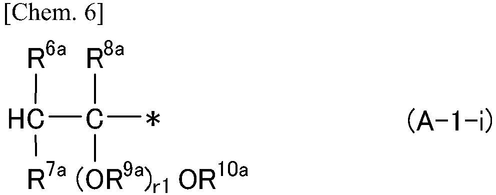

wherein
in the formula (A-1-i), * represents a bonding position with a carbon atom in the constituent unit represented by the general formula (A-1).

In the formula (A-1-i), R^{6a}, R^{7a}, and R^{8a} each independently represent a hydrogen atom or a hydrocarbon group having 1 to 8 carbon atoms, preferably a hydrogen atom or a hydrocarbon group having 1 to 6 carbon atoms, more preferably a hydrogen atom or an alkyl group having 1 to 3 carbon atoms.

Examples of the hydrocarbon group having 1 to 8 carbon atoms represented by each of R^{6a}, R^{7a}, and R^{8a} include the same groups as those listed as the examples of the hydrocarbon group having 1 to 8 carbon atoms represented by each of R^{1a}, R^{2a}, and R^{3a} in the general formula (A-1).

In the formula (A-1-i), R^{9a} represents a divalent hydrocarbon group having 2 to 10 carbon atoms, preferably a divalent hydrocarbon group having 2 to 6 carbon atoms, more preferably a divalent aliphatic group having 2 to 4 carbon atoms.

In the formula (A-1-i), r1 represents the number of repeating units each represented by OR^{9a}, and represents an integer of from 0 to 10, preferably an integer of from 0 to 5, more preferably an integer of from 0 to 3, still more preferably 0. When a plurality of OR^{9a}s are present in the constituent unit represented by the general formula (A-1-1), the plurality of OR^{9a}s may be identical to or different from each other.

Examples of the divalent hydrocarbon group having 2 to 10 carbon atoms represented by R^{9a} include the same groups as those listed as the examples of the divalent hydrocarbon group having 2 to 10 carbon atoms represented by R^{4a} in the general formula (A-1).

In the formula (A-1-i), R^{10a} represents a hydrocarbon group having 1 to 10 carbon atoms, preferably a hydrocarbon group having 1 to 8 carbon atoms, more preferably an alkyl group having 1 to 8 carbon atoms.

When r1 in the general formula (A-1-i) represents 0, R^{10a} preferably represents an alkyl group having 1 to 6 carbon atoms, and when r1 represents 1 or more, R^{10a} preferably represents an alkyl group having 1 to 4 carbon atoms.

Examples of the hydrocarbon group having 1 to 10 carbon atoms represented by R^{10a} include the same groups as those listed as the examples of the hydrocarbon group having 1 to 10 carbon atoms represented by R^{5a} in the general formula (A-1).

In addition, when one terminal portion of the polymer (A-1) is a group represented by the general formula (A-1-i), the other terminal portion thereof is preferably any one of a group represented by the general formula (A-1-i), a group represented by the following general formula (A-1-ii), a group represented by the following general formula (A-1-iii), and a group having an olefinically unsaturated bond:

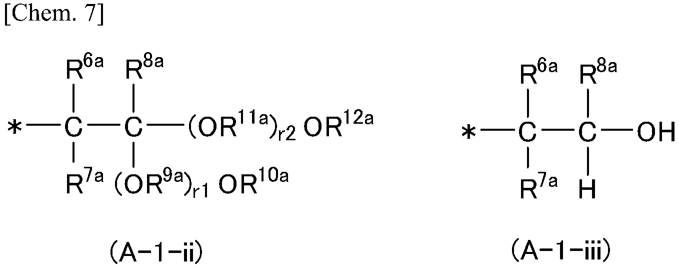

wherein
in the formulae (A-1-ii) and (A-1-iii), the definitions of R^{6a}, R^{7a}, R^{8a}, R^{9a}, R^{10a}, and r1 are the same as those in the general formula (A-1-i), and in the formula (A-1-ii), the definitions of R^{11a}, R^{12a}, and r2 are the same as those of R^{9a}, R^{10a}, and r1 in the general formula (A-1-i), respectively.

### (Polyalkylene Glycol (PAG))

The PAG is preferably a polymer (A-2) represented by the following general formula (A-2).

R^{13a}-[(OR^{14a})ₘ-OR^{15a}]ₙ (A-2)

When the base oil (A) contains the PAG, the PAGs may be used alone or in combination thereof.

In the general formula (A-2), R^{13a} represents a hydrogen atom, a monovalent hydrocarbon group having 1 to 10 carbon atoms, an acyl group having 2 to 10 carbon atoms, a divalent to hexavalent hydrocarbon group having 1 to 10 carbon atoms, or a substituted or unsubstituted heterocyclic group having 3 to 10 ring-forming atoms, R^{14a} represents an alkylene group having 2 to 4 carbon atoms, and R^{15a} represents a hydrogen atom, a monovalent hydrocarbon group having 1 to 10 carbon atoms, an acyl group having 2 to 10 carbon atoms, or a substituted or unsubstituted heterocyclic group having 3 to 10 ring-forming atoms.

Examples of the substituent that the heterocyclic group may have include: an alkyl group having 1 to 10 (preferably 1 to 6, more preferably 1 to 3) carbon atoms; a cycloalkyl group having 3 to 10 (preferably 3 to 8, more preferably 5 or 6) ring-forming carbon atoms; an aryl group having 6 to 18 (preferably 6 to 12) ring-forming carbon atoms; a halogen atom (a fluorine atom, a chlorine atom, a bromine atom, or an iodine atom); a cyano group; a nitro group; a hydroxy group; and an amino group.

Those substituents may each be further substituted with any one of the above-mentioned substituents.

"n" represents an integer of from 1 to 6, preferably an integer of from 1 to 3, more preferably 1.
"n" is determined in accordance with the number of the bonding sites of R^{13a} in the general formula (A-2). For example, when R^{13a} represents an alkyl group or an acyl group, "n" represents 1, and when R^{13a} represents a hydrocarbon group or a heterocyclic group, and the valence of the group is divalent, trivalent, tetravalent, pentavalent, or hexavalent, "n" represents 2, 3, 4, 5, or 6, respectively.
"m" represents the number of repeating units each represented by OR^{14a}, and represents a number of 1 or more, preferably such a number that m×n becomes from 6 to 80. The value of "m" is a value appropriately set so that the kinematic viscosity of the base oil (A) at 100°C may fall within the range of from 2 mm²/s to 50 mm²/s, and the value is not particularly limited as long as the kinematic viscosity is adjusted so as to fall within the predetermined range.

A plurality of R^{14a}s may be identical to or different from each other. In addition, when "n" represents 2 or more, a plurality of R^{15a}s in one molecule may be identical to or different from each other.

Examples of the above-mentioned monovalent hydrocarbon group represented by each of R^{13a} and R^{15a} include: alkyl groups, such as a methyl group, an ethyl group, a n-propyl group, an isopropyl group, a *n*-butyl group, an isobutyl group, a *sec-*butyl group, a *tert*-butyl group, various pentyl groups, various hexyl groups, various heptyl groups, various octyl groups, various nonyl groups, and various decyl groups; cycloalkyl groups, such as a cyclopentyl group, a cyclohexyl group, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphtyl groups; and arylalkyl groups, such as a benzyl group, various phenylethyl groups, various methylbenzyl groups, various phenylpropyl groups, and various phenylbutyl groups. The above-mentioned alkyl group may be linear or branched.

From the viewpoint of the compatibility of the refrigerator oil composition with a refrigerant, the number of the carbon atoms of the monovalent hydrocarbon group represented by each of R^{13a} and R^{15a} is preferably from 1 to 10, more preferably from 1 to 6, still more preferably from 1 to 3.

The hydrocarbon group moiety of the above-mentioned acyl group having 2 to 10 carbon atoms represented by each of R^{13a} and R^{15a} may be linear, branched, or cyclic. Examples of the alkyl group moiety include hydrocarbon groups each having 1 to 9 carbon atoms among the hydrocarbon groups represented by R^{13a} and R^{15a} described above.

From the viewpoint of the compatibility of the refrigerator oil composition with a refrigerant, the number of the carbon atoms of the acyl group represented by each of R^{13a} and R^{15a} is preferably from 2 to 8, more preferably from 2 to 6.

Examples of the above-mentioned divalent to hexavalent hydrocarbon group represented by R^{13a} include residual groups each obtained by further removing 1 to 5 hydrogen atoms from the above-mentioned monovalent hydrocarbon group represented by R^{13a}, and residual groups each obtained by removing a hydroxy group from a polyhydric alcohol, such as trimethylolpropane, glycerin, pentaerythritol, sorbitol, 1,2,3-trihydroxycyclohexane, or 1,3,5-trihydroxycyclohexane.

From the viewpoint of the compatibility of the refrigerator oil composition with a refrigerant, the number of the carbon atoms of the divalent to hexavalent acyl group represented by R^{13a} is preferably from 2 to 10, more preferably from 2 to 6.

The above-mentioned heterocyclic group represented by each of R^{13a} and R^{15a} is preferably an oxygen atom-containing heterocyclic group or a sulfur atom-containing heterocyclic group. The heterocyclic group may be a saturated ring or an unsaturated ring.

Examples of the above-mentioned oxygen atom-containing heterocyclic group include residual groups obtained by removing one to six of the hydrogen atoms of oxygen atom-containing saturated heterocycles, such as ethylene oxide, 1,3-propylene oxide, tetrahydrofuran, tetrahydropyrane, and hexamethylene oxide, and oxygen atom-containing unsaturated heterocycles, such as acetylene oxide, furan, pyrane, oxycycloheptatriene, isobenzofuran, and isochromene.

In addition, examples of the above-mentioned sulfur atom-containing heterocyclic group include residual groups obtained by removing one to six of the hydrogen atoms of sulfur atom-containing saturated heterocycles, such as ethylene sulfide, trimethylene sulfide, tetrahydrothiophene, tetrahydrothiopyrane, and hexamethylene sulfide, and sulfur atom-containing unsaturated heterocycles, such as acetylene sulfide, thiophene, thiapyrane, and thiotripyridene.

The above-mentioned heterocyclic group represented by each of R^{13a} and R^{15a} may have a substituent, and the substituent may be bonded to an oxygen atom in the general formula (A-2). Although the substituent is as described above, the substituent is preferably an alkyl group having 1 to 6 carbon atoms, more preferably an alkyl group having 1 to 3 carbon atoms.

From the viewpoint of the compatibility with the refrigerant, the number of the ring-forming atoms of the above-mentioned heterocyclic group is preferably from 3 to 10, more preferably from 3 to 6.

Examples of the above-mentioned alkylene group represented by R^{14a} include: alkylene groups each having 2 carbon atoms, such as a dimethylene group (-CH₂CH₂-) and an ethylene group (-CH(CH₃)-); alkylene groups each having 3 carbon atoms, such as a trimethylene group (-CH₂CH₂CH₂-), a propylene group (-CH(CH₃)CH₂-), a propylidene group (-CHCH₂CH₃-), and an isopropylidene group (-C(CH₃)₂-); and alkylene groups each having 4 carbon atoms, such as a tetramethylene group (-CH₂CH₂CH₂CH₂-), a 1-methyltrimethylene group (-CH(CH₃)CH₂CH₂-), a 2-methyltrimethylene group (-CH₂CH(CH₃)CH₂-), and a butylene group (-C(CH₃)₂CH₂-). R^{14a} preferably represents a propylene group (-CH(CH₃)CH₂-) among them.

In the polymer (A-2) represented by the general formula (A-2), the content of the oxypropylene unit (-OCH(CH₃)CH₂-) is preferably 50 mol% or more, more preferably 65 mol% or more, still more preferably 80 mol% or more with respect to the total content (100 mol%) of the oxyalkylene (OR^{14a}) in the polymer (A-2).

Among the polymers (A-2) each represented by the general formula (A-2), one or more kinds selected from the group consisting of: a polyoxypropylene glycol dimethyl ether represented by the following general formula (A-2-i); a polyoxyethylene polyoxypropylene glycol dimethyl ether represented by the following general formula (A-2-ii); a polyoxypropylene glycol monobutyl ether represented by the following general formula (A-2-iii); and polyoxypropylene glycol diacetate are preferred. 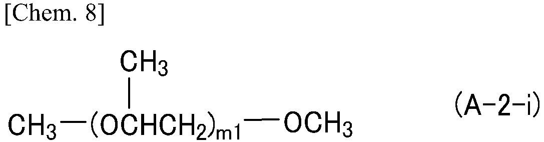 wherein
in the formula (A-2-i), m1 represents a number of 1 or more, preferably a number of from 6 to 80. 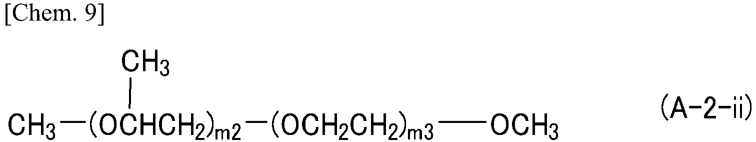 wherein
in the formula (A-2-ii), m2 and m3 each independently represent a number of 1 or more, preferably such a number that the value of m2+m3 becomes from 6 to 80. 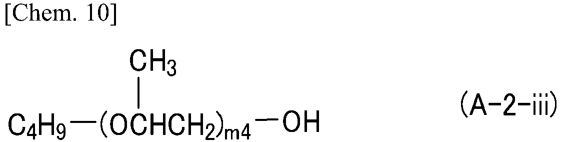 wherein
in the formula (A-2-iii), m4 represents a number of 1 or more, preferably a number of from 6 to 80.

m1 in the general formula (A-2-i), m2 and m3 in the general formula (A-2-ii), and m4 in the general formula (A-2-iii) only need to be appropriately selected in accordance with the kinematic viscosity that the base oil (A) is required to have.

### (Polyol Ester (POE))

The POE is, for example, an ester of a diol or a polyol and a fatty acid. When the base oil (A) contains the POE, the POEs may be used alone or in combination thereof.

The POE is preferably an ester of a diol or a polyol having 3 to 20 hydroxy groups and a fatty acid having 3 to 20 carbon atoms.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include: polyhydric alcohols, such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerins (dimer to icosamer of glycerin), 1,3,5-pentanetriol, sorbitol, sorbitan, a sorbitol glycerin condensate, adonitol, arabitol, xylitol, and mannitol; sugars, such as xylose, arabinose, ribose, rhamnose, glucose, fructose, galactose, mannose, sorbose, cellobiose, maltose, isomaltose, trehalose, sucrose, raffinose, gentianose, and melezitose; and partially etherified products thereof and methylglucoside (glycoside).

Among them, hindered alcohols, such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol), are preferred. The term "hindered alcohol" means an alcohol having a quaternary carbon atom bonded to four carbon atoms.

The number of the carbon atoms of the fatty acid is preferably 3 or more, more preferably 4 or more, still more preferably 5 or more, still further more preferably 8 or more from the viewpoint of the lubrication performance of the refrigerator oil composition, and is preferably 20 or less, more preferably 16 or less, still more preferably 12 or less, still further more preferably 10 or less from the viewpoint of the compatibility with the refrigerant.

The number of the carbon atoms of the above-mentioned fatty acid includes the carbon atom of the carboxy group (-COOH) of the fatty acid.

In addition, although the fatty acid may be any one of a linear fatty acid and a branched fatty acid, the fatty acid is preferably a linear fatty acid from the viewpoint of the lubrication performance, and is preferably a branched fatty acid from the viewpoint of the hydrolysis stability thereof. Further, the fatty acid may be any one of a saturated fatty acid and an unsaturated fatty acid.

Examples of the fatty acid include: linear or branched fatty acids, such as isobutyric acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, and oleic acid; and so-called neo acids each having a quaternary α-carbon atom.

More specifically, for example, isobutyric acid, valeric acid (*n*-pentanoic acid), caproic acid (*n*-hexanoic acid), enanthic acid (*n*-heptanoic acid), caprylic acid (*n*-octanoic acid), pelargonic acid (*n*-nonanoic acid), capric acid (*n*-decanoic acid), oleic acid (*cis*-9-octadecenoic acid), isopentanoic acid (3-methylbutanoic acid), 2-methylhexanoic acid, 2-ethylpentanoic acid, 2-ethylhexanoic acid, and 3,5,5-trimethylhexanoic acid are preferred.

The POE may be a partial ester in which part of a plurality of hydroxy groups of the polyol remains unesterified, or may be a complete ester in which all the hydroxy groups are esterified. In addition, the POE may be a mixture of a partial ester and a complete ester, but is preferably a complete ester.

The POE is preferably an ester of a hindered alcohol, such as neopentyl glycol, trimethylolethane, trimethylolpropane, trimethylolbutane, di-(trimethylolpropane), tri-(trimethylolpropane), pentaerythritol, di-(pentaerythritol), or tri-(pentaerythritol), more preferably an ester of neopentyl glycol, trimethylolethane, trimethylolpropane, trimethylolbutane, or pentaerythritol from the viewpoint that the refrigerator oil composition is more excellent in hydrolysis stability. Further, the POE is still more preferably an ester of pentaerythritol from the viewpoint that the refrigerator oil composition is particularly excellent in compatibility with the refrigerant and hydrolysis stability.

Preferred specific examples of the POE include: a diester of neopentyl glycol and one kind or two or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid; a triester of trimethylolethane and one kind or two or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid; a triester of trimethylolpropane and one kind or two or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid; a triester of trimethylolbutane and one kind or two or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid; and a tetraester of pentaerythritol and one kind or two or more kinds of fatty acids selected from the group consisting of isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimethylhexanoic acid.

The ester of a polyol and two or more kinds of fatty acids may be an ester obtained by mixing two or more kinds of esters of one kind of fatty acid and a polyol. Among the POEs, an ester of two or more kinds of mixed fatty acids and a polyol is preferred from the viewpoints of an improvement in low temperature characteristic and the compatibility with the refrigerant.

### (Mineral Oil)

Examples of the mineral oil include: a refined oil obtained by subjecting a lubricating oil fraction obtained by distilling a normal-pressure residual oil, which is obtained by distilling a paraffin base, intermediate base, or naphthene base crude oil under normal pressure or by distilling a crude oil under normal pressure, under reduced pressure to one or more kinds of treatment among solvent deasphalting, solvent extraction, hydrocracking, solvent dewaxing, catalytic dewaxing, and hydrorefining; and an oil produced by isomerizing a mineral-based wax.

When the base oil (A) contains the mineral oil, the mineral oils may be used alone or in combination thereof.

In the refrigerator oil composition of this embodiment, the main component of the base oil (A) is preferably the above-mentioned base oil (A1), more preferably the above-mentioned base oil (A2), still more preferably the above-mentioned base oil (A3). The term "main component" as used herein means a component whose content is largest.

The content of the base oil (A1), the base oil (A2), or the base oil (A3) in the base oil (A) is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass% with respect to the total amount (100 mass%) of the base oil (A).

In particular, the content of the base oil (A3) in the base oil (A) is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass%.

The base oil (A) may further contain any other base oil in addition to the base oil (A1), the base oil (A2), or the base oil (A3).

The other base oil is, for example, a synthetic oil that does not correspond to the PVE, the PAG, and the POE described above, such as a polyester, a polycarbonate, a hydrogenated product of an α-olefin oligomer, an alicyclic hydrocarbon compound, an alkylated aromatic hydrocarbon compound, or a copolymer (ECP) of a poly(oxy)alkylene glycol or a monoether thereof and a polyvinyl ether.

The term "copolymer (ECP) of a poly(oxy)alkylene glycol or a monoether thereof and a polyvinyl ether" means a copolymer having a constituent unit derived from the poly(oxy)alkylene glycol or the monoether thereof and a constituent unit derived from the polyvinyl ether, and the term "poly(oxy)alkylene glycol" refers to both of a polyalkylene glycol and a polyoxyalkylene glycol.

The 40°C kinematic viscosity of the base oil (A) is preferably from 5 mm²/s to 120 mm²/s, more preferably from 10 mm²/s to 110 mm²/s, still more preferably from 30 mm²/s to 100 mm²/s. When the 40°C kinematic viscosity of the base oil (A) falls within the above-mentioned ranges, the wear resistance of the refrigerator oil composition becomes more satisfactory.

In this description, the 40°C kinematic viscosity is a value measured in conformity with JIS K 2283:2000 by using a glass capillary viscometer.

### <Phosphonic Acid Ester (B)>

The refrigerator oil composition of this embodiment includes the phosphonic acid ester (B) represented by the following general formula (1): 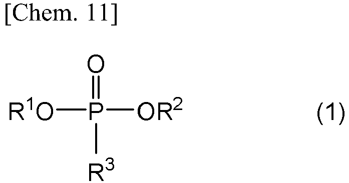 wherein R¹ and R² each independently represent a hydrocarbon group having 1 to 8 carbon atoms, and R³ represents a hydrocarbon group having 9 to 40 carbon atoms that may have a hydroxy group as a substituent.

The phosphonic acid ester (B) represented by the general formula (1) imparts satisfactory wear resistance probably because of the following reasons: R¹ and R² bonded to oxygen atoms are relatively small groups, and hence each serve to adsorb to a metal surface; and meanwhile, R³ directed toward the inside of an oil film is a relatively bulky group. In addition, it is assumed that the heat stability of the refrigerator oil composition is not impaired because R¹, R², and R³ each represent a hydrocarbon group that may have a hydroxy group as a substituent.

In the general formula (1), examples of the hydrocarbon group having 1 to 8 carbon atoms represented by each of R¹ and R² include: an alkyl group having 1 to 8 carbon atoms; an alkenyl group having 2 to 8 carbon atoms; an alkynyl group having 2 to 8 carbon atoms; a cycloalkyl group having 6 to 8 carbon atoms; an alkylcycloalkyl group having 6 to 8 carbon atoms; and an aryl group having 6 to 8 carbon atoms. Among them, a substituted or unsubstituted alkyl group having 1 to 8 carbon atoms is preferred, an alkyl group having 1 to 4 carbon atoms is more preferred, and a methyl group or an ethyl group is particularly preferred.

Examples of the alkyl group having 1 to 8 carbon atoms include a methyl group, an ethyl group, a *n*-propyl group, an isopropyl group, a *n*-butyl group, an isobutyl group, a *sec-*butyl group, a *tert*-butyl group, various pentyl groups, and various hexyl groups. The above-mentioned alkyl group may be linear or branched.

Examples of the cycloalkyl group having 6 to 8 carbon atoms include a cyclohexyl group, a cycloheptyl group, and a cyclooctyl group.

Examples of the alkylcycloalkyl group having 6 to 8 carbon atoms include various methylcyclohexyl groups, various ethylcyclohexyl groups, and various dimethylcyclohexyl groups.

Examples of the above-mentioned aryl group having 6 to 8 carbon atoms include substituted or unsubstituted phenyl groups, and specific examples thereof include a phenyl group, various methylphenyl groups, and various dimethylphenyl group.

In the general formula (1), examples of the hydrocarbon group having 9 to 40 carbon atoms that may have a hydroxy group as a substituent, the hydrocarbon group being represented by R³, include: a substituted or unsubstituted alkyl group having 9 to 40 carbon atoms; a substituted or unsubstituted alkenyl group having 9 to 40 carbon atoms; a substituted or unsubstituted alkynyl group having 9 to 40 carbon atoms; a substituted or unsubstituted cycloalkyl group having 9 to 40 carbon atoms; a substituted or unsubstituted alkylcycloalkyl group having 9 to 40 carbon atoms; and a substituted or unsubstituted aryl group having 9 to 40 carbon atoms. Among them, a substituted or unsubstituted alkyl group having 9 to 40 carbon atoms, or a substituted or unsubstituted aryl group having 9 to 40 carbon atoms is preferred.

Substituents that the various hydrocarbon groups may have are hydroxy groups.

Examples of the above-mentioned substituted or unsubstituted alkyl group having 9 to 40 carbon atoms include alkyl groups, such as various nonyl groups and various decyl groups. The above-mentioned alkyl group may be linear or branched.

Examples of the above-mentioned substituted or unsubstituted aryl group having 9 to 40 carbon atoms include a substituted or unsubstituted phenyl group, and a substituted or unsubstituted naphthyl group. Among them, a substituted or unsubstituted phenyl group is preferred.

From the above-mentioned viewpoint, it is preferred that R¹ and R² in the general formula (1) each independently represent an alkyl group having 1 to 4 carbon atoms, or an alkenyl group having 2 to 4 carbon atoms.

Meanwhile, R³ in the general formula (1) preferably represents a hydrocarbon group having 12 to 30 carbon atoms that may have a hydroxy group as a substituent. Specifically, R³ more preferably represents a linear or branched alkyl group or alkenyl group having 14 to 24 carbon atoms, or a group represented by the following general formula (2): 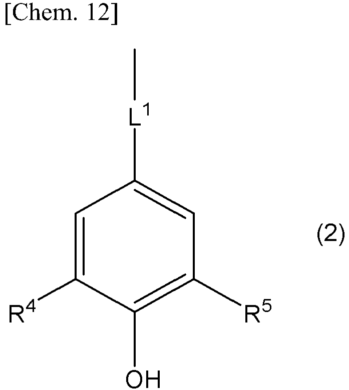 wherein L¹ represents a single bond, -CH₂-, or -CH₂CH₂-, and R⁴ and R⁵ each independently represent a hydrocarbon group having 2 to 10 carbon atoms.

When R³ described above represents a group represented by the general formula (2), R⁴ and R⁵ adjacent to a hydroxy group each preferably represent a group that is somewhat bulky from the viewpoint of the heat stability of the refrigerator oil composition. Such R⁴ and R⁵ each more preferably represent a hydrocarbon group having 3 to 8 carbon atoms.

In the general formula (2), examples of the hydrocarbon group having 2 to 10 carbon atoms represented by R⁴ or R⁵ include: an alkyl group having 2 to 10 carbon atoms; an alkenyl group having 2 to 10 carbon atoms; an alkynyl group having 2 to 10 carbon atoms; a cycloalkyl group having 6 to 10 carbon atoms; an alkylcycloalkyl group having 6 to 10 carbon atoms; and an aryl group having 6 to 10 carbon atoms. Among them, a substituted or unsubstituted alkyl group having 2 to 10 carbon atoms is preferred, an alkyl group having 3 to 6 carbon atoms is more preferred, and a t-butyl group is particularly preferred.

Examples of the above-mentioned alkyl group having 2 to 10 carbon atoms include: alkyl groups, such as an ethyl group, a *n*-propyl group, an isopropyl group, a *n*-butyl group, an isobutyl group, a *sec-*butyl group, a *tert*-butyl group, various pentyl groups, various hexyl groups, various heptyl groups, various octyl groups, various nonyl groups, and various decyl groups; and cycloalkyl groups, such as a cyclopentyl group, a cyclohexyl group, various methylcyclohexyl groups, various ethylcyclohexyl groups, various propylcyclohexyl groups, and various dimethylcyclohexyl groups. The above-mentioned alkyl group may be linear or branched.

The number of the carbon atoms of the above-mentioned alkyl group is preferably from 2 to 10, more preferably from 3 to 8.

Examples of the above-mentioned substituted or unsubstituted aryl group having 6 to 10 carbon atoms include a substituted or unsubstituted phenyl group and naphtyl group.

In the refrigerator oil composition of this embodiment, from the viewpoint of improving its wear resistance, the content of the component (B) is preferably 200 ppm by mass or more, more preferably 300 ppm by mass or more, still more preferably 400 ppm by mass or more, particularly preferably 500 ppm by mass or more in terms of phosphorus atom derived from the component (B) with respect to the total amount of the refrigerator oil composition, and is preferably 3,000 ppm by mass or less, more preferably 2,400 ppm by mass or less, still more preferably 2,000 ppm by mass or less, particularly preferably 1,500 ppm by mass or less. Those upper limit values and lower limit values may be freely combined. Specifically, the content is preferably from 200 ppm by mass to 3,000 ppm by mass, more preferably from 300 ppm by mass to 2,400 ppm by mass, still more preferably from 400 ppm by mass to 2,000 ppm by mass, particularly preferably from 500 ppm by mass to 1,500 ppm by mass.

The component (B) to be used in the refrigerator oil composition of this embodiment has a hydrocarbon group that may have a hydroxy group as a substituent. Accordingly, the component is excellent in heat stability, and hence its content can be made relatively large.

### <Additive>

The refrigerator oil composition of this embodiment may further include an additive.

From the viewpoint of improving the stability of the refrigerator oil composition, the composition preferably includes, as the additive, one or more kinds selected from the group consisting of: an antioxidant; an oiliness improver; an oxygen scavenger; an acid scavenger; a copper deactivator; a rust inhibitor; an antifoaming agent; and a viscosity index improver, and more preferably includes at least an antioxidant. In addition, the refrigerator oil composition of this embodiment may include an extreme-pressure agent except the component (B).

Those additives of each kind may be used alone or in combination thereof.

The total content of those additives is preferably from 0 mass% to 10 mass%, more preferably from 0.01 mass% to 8.0 mass%, still more preferably from 0.1 mass% to 5.0 mass% with respect to the total amount (100 mass%) of the refrigerator oil composition.

### (Antioxidant)

The antioxidant is preferably one or more kinds selected from the group consisting of: a phenol-based antioxidant; and an amine-based antioxidant.

Examples of the phenol-based antioxidant include 2,6-di-*tert*-butyl-4-methylphenol (DBPC), 2,6-di-*tert*-butyl-4-ethylphenol, and 2,2'-methylenebis(4-methyl-6-*tert*-butylphenol).

Examples of the amine-based antioxidant include phenyl-α-naphthylamine and *N,N'-*diphenyl-*p*-phenylenediamine.

Among them, 2,6-di-*tert*-butyl-4-methylphenol (DBPC) is more preferred.

From the viewpoints of the stability and antioxidant performance of the refrigerator oil composition, the content of the antioxidant is preferably from 0.01 mass% to 5.0 mass%, more preferably from 0.05 mass% to 3.0 mass%, still more preferably from 0.10 mass% to 1.50 mass% with respect to the total amount (100 mass%) of the refrigerator oil composition.

### (Oiliness Improver)

Examples of the oiliness improver include: aliphatic saturated or unsaturated monocarboxylic acids, such as stearic acid and oleic acid; polymerized fatty acids, such as dimer acids and hydrogenated dimer acids; hydroxy fatty acids, such as ricinoleic acid and 12-hydroxystearic acid; aliphatic saturated or unsaturated monoalcohols, such as lauryl alcohol and oleyl alcohol; aliphatic saturated or unsaturated monoamines, such as stearylamine and oleylamine; aliphatic saturated or unsaturated monocarboxylic acid amides, such as lauric acid amide and oleic acid amide; and partial esters of polyhydric alcohols, such as glycerin and sorbitol, and aliphatic saturated or unsaturated monocarboxylic acids.

### (Oxygen Scavenger)

Examples of the oxygen scavenger include an aliphatic unsaturated compound and a terpene having a double bond.

The above-mentioned aliphatic unsaturated compound is preferably an unsaturated hydrocarbon, and specific examples thereof include: an olefin; and a polyene, such as a diene or a triene. The olefin is preferably an α-olefin, such as 1-tetradecene, 1-hexadecene, or 1-octadecene, from the viewpoint of reactivity with oxygen.

An aliphatic unsaturated compound except the foregoing is preferably an unsaturated aliphatic alcohol having a conjugated double bond such as vitamin A ((2*E*,4*E*,6*E*,8*E*)-3,7-dimethyl-9-(2,6,6-trimethylcyclohexen-1-yl)nona-2,4,6,8-tetraen-1-ol) represented by the molecular formula C₂₀H₃₀O from the viewpoint of reactivity with oxygen.

The terpene having a double bond is preferably a terpene-based hydrocarbon having a double bond, and is more preferably α-farnesene (C₁₅H₂₄: 3,7,11-trimethyldodeca-1,3,6,10-tetraene) or β-farnesene (C₁₅H₂₄: 7,11-dimethyl-3-methylidenedodeca-1,6,10-triene) from the viewpoint of reactivity with oxygen.

### (Acid Scavenger)

Examples of the acid scavenger may include epoxy compounds, such as phenyl glycidyl ether, an alkyl glycidyl ether, an alkylene glycol glycidyl ether, cyclohexene oxide, an α-olefin oxide, and epoxidized soybean oil. However, at least one kind selected from a glycidyl ester, a glycidyl ether, and an α-olefin oxide is particularly suitably used as the acid scavenger.

The glycidyl ether is, for example, a glycidyl ether derived from a linear, branched, or cyclic, saturated or unsaturated, aliphatic monoalcohol or polyhydric alcohol having typically 3 to 30, preferably 4 to 24, more preferably 6 to 16 carbon atoms, or from an aromatic compound containing one or more hydroxy groups. In the case of an aliphatic polyhydric alcohol or an aromatic compound containing two or more hydroxy groups, all the hydroxy groups are preferably subjected to glycidyl etherification from the viewpoint of suppressing an increase in hydroxyl value for the stability of the refrigerator oil composition.

Among them, a glycidyl ether derived from a linear, branched, or cyclic, saturated, aliphatic monoalcohol having 6 to 16 carbon atoms is particularly preferred. Examples of such glycidyl ether include 2-ethylethyl glycidyl ether, 2-ethylhexyl glycidyl ether, isononyl glycidyl ether, caprinoyl glycidyl ether, lauryl glycidyl ether, and myristyl glycidyl ether.

Meanwhile, an α-olefin oxide having generally 4 to 50, preferably 4 to 24, more preferably 6 to 16 carbon atoms is used as the α-olefin oxide.

The acid scavengers may be used alone or in combination thereof.

The content of the acid scavenger is preferably from 0.01 mass% to 5.0 mass%, more preferably from 0.05 mass% to 3.0 mass%, still more preferably from 0.10 mass% to 2.0 mass% with respect to the total amount (100 mass%) of the refrigerator oil composition.

### (Copper Deactivator)

An example of the copper deactivator is an *N*-[*N*,*N*'-dialkyl (alkyl group having 3 to 12 carbon atoms) aminomethyl]triazole.

### (Rust Inhibitor)

Examples of the rust inhibitor include a metal sulfonate, an aliphatic amine, an organic phosphorous acid ester, an organic phosphoric acid ester, an organic sulfonic acid metal salt, an organic phosphoric acid metal salt, an alkenyl succinic acid ester, and a polyhydric alcohol ester.

### (Antifoaming Agent)

Examples of the antifoaming agent include silicone-based antifoaming agents, such as a silicone oil and a fluorinated silicone oil.

### (Viscosity Index Improver)

Examples of the viscosity index improver include polymethacrylate, polyisobutylene, an ethylene-propylene copolymer, and a styrene-diene hydrogenated copolymer.

### (Extreme-pressure Agent except Component (B))

Examples of the extreme-pressure agent except the component (B) include a phosphorus-based extreme-pressure agent except the component (B), a carboxylic acid metal salt, and a sulfur-based extreme-pressure agent.

Examples of the phosphorus-based extreme-pressure agent except the component (B) include a phosphoric acid ester, an acid phosphoric acid ester, a phosphorous acid ester, an acid phosphorous acid ester, and amine salts thereof. Specific examples thereof include tricresyl phosphate (TCP), triphenyl phosphate, tri(nonylphenyl) phosphite, dioleyl hydrogen phosphite, and 2-ethylhexyl diphenyl phosphite.

The carboxylic acid metal salt is, for example, a metal salt of a carboxylic acid having 3 to 60 (preferably 3 to 30) carbon atoms. Among them, one or more kinds selected from the group consisting of the metal salts of a fatty acid having 12 to 30 carbon atoms and a dicarboxylic acid having 3 to 30 carbon atoms are preferred. A metal for forming the metal salt is preferably an alkali metal or an alkaline earth metal, more preferably an alkali metal.

Examples of the sulfur-based extreme-pressure agent include a sulfurized oil and fat, a sulfurized fatty acid, a sulfurized ester, a sulfurized olefin, dihydrocarvyl polysulfide, a thiocarbamate, a thioterpene, and a dialkyl thiodipropionate.

The refrigerator oil composition of this embodiment may be free of the extreme-pressure agent except the component (B) because the component (B) exhibits an effect as an extreme-pressure agent.

When the refrigerator oil composition of this embodiment includes the extreme-pressure agent except the component (B), its content is preferably 1 mass% or less, more preferably 0.5 mass% or less, still more preferably 0.1 mass% or less with respect to the total amount (100 mass%) of the refrigerator oil composition from the viewpoints of the lubricity and stability of the refrigerator oil composition.

In addition, the content of a dithiophosphoric acid ester in the refrigerator oil composition of this embodiment is preferably 1 mass% or less, more preferably 0.5 mass% or less, still more preferably 0.1 mass% or less with respect to the total amount (100 mass%) of the refrigerator oil composition from the viewpoint of improving the corrosion resistance of the refrigerator oil composition. It is most preferred that the composition be free of the ester.

### <Applications of Refrigerator Oil Composition>

More specifically, the refrigerator oil composition of this embodiment is used in a refrigerator having a refrigeration cycle formed of a configuration including, as essential components, a compressor, a condenser, an expansion mechanism (e.g., an expansion valve), and an evaporator, or the compressor, the condenser, the expansion mechanism, a dryer, and the evaporator. The refrigerator oil composition of this embodiment is preferably used for lubricating a sliding portion arranged in, for example, the compressor.

Accordingly, the present invention also provides a lubrication method including using the refrigerator oil composition of this embodiment in a lubrication portion in a refrigerator.

In addition, the refrigerator oil composition of this embodiment may be used in, for example, an air conditioner, a cold storage, a vending machine, a showcase, a refrigeration system, a hot water system, or a heating system.

Examples of the air conditioner include: a car air conditioner, such as an open car air conditioner or an electric car air conditioner; and a gas heat pump (GHP) air conditioner.

### [Composition for Refrigerator]

A composition for a refrigerator of this embodiment is a composition for a refrigerator including the refrigerator oil composition of this embodiment and a refrigerant.

### <Refrigerant>

Examples of the refrigerant include: a hydrofluorocarbon refrigerant, such as an unsaturated hydrofluorocarbon compound or a saturated hydrofluorocarbon compound; and a natural refrigerant, such as a hydrocarbon-based refrigerant, carbon dioxide, or ammonia. Those refrigerants may be used alone or in combination thereof. The composition for a refrigerator preferably includes, as the refrigerant, one or more kinds selected from the group consisting of: an unsaturated hydrofluorocarbon compound; a saturated hydrofluorocarbon compound; a hydrocarbon; carbon dioxide; and ammonia among them, and more preferably includes an unsaturated hydrofluorocarbon compound.

The respective refrigerants are described below.

### <Unsaturated Hydrofluorocarbon Compound>

The unsaturated hydrofluorocarbon compound has the following drawback: its heat stability at high temperatures is low, and hence when the compound is used as a refrigerant, an acidic substance such as hydrogen fluoride (HF) is liable to be produced to increase the acid value of the composition for a refrigerator. However, the use of the refrigerator oil composition of this embodiment eliminates the drawback of the unsaturated hydrofluorocarbon compound in that the acid value is liable to increase, and hence enables the securement of the stability of a refrigeration system or the like using the unsaturated hydrofluorocarbon compound as a refrigerant. In addition, the refrigerator oil composition of this embodiment exhibits particularly excellent wear resistance and particularly excellent seizure resistance when combined with a hydrofluorocarbon refrigerant (in particular, an unsaturated hydrofluorocarbon refrigerant).

Accordingly, in the composition for a refrigerator of this embodiment, the refrigerant is preferably a refrigerant containing the unsaturated hydrofluorocarbon compound (HFO).

The content of the unsaturated hydrofluorocarbon compound (HFO) in the refrigerant is preferably 50 mass% or more, more preferably 70 mass% or more, still more preferably 90 mass% or more with respect to the total amount (100 mass%) of the refrigerant. It is still further more preferred that the refrigerant be a refrigerant formed only of the unsaturated hydrofluorocarbon compound (HFO).

Examples of the unsaturated hydrofluorocarbon compound include compounds each having a carbon-carbon double bond, such as the fluorinated products of: a linear or branched chain olefin having 2 to 6 carbon atoms; and a cyclic olefin having 4 or more and 6 or less carbon atoms.

More specific examples thereof include: ethylene having introduced thereinto 1 to 3 fluorine atoms; propene having introduced thereinto 1 to 5 fluorine atoms; butene having introduced thereinto 1 to 7 fluorine atoms; pentene having introduced thereinto 1 to 9 fluorine atoms; hexene having introduced thereinto 1 to 11 fluorine atoms; cyclobutene having introduced thereinto 1 to 5 fluorine atoms; cyclopentene having introduced thereinto 1 to 7 fluorine atoms; and cyclohexene having introduced thereinto 1 to 9 fluorine atoms.

Among those unsaturated hydrofluorocarbon compounds, a fluorinated product of propene is preferred, propene having introduced thereinto 3 to 5 fluorine atoms is more preferred, and propene having introduced thereinto 4 fluorine atoms is still more preferred. Specific examples of such preferred compound include 1,3,3,3-tetrafluoropropene (R1234ze) and 2,3,3,3-tetrafluoropropene (R1234yf).

Those unsaturated hydrofluorocarbon compounds may be used alone or in combination thereof, or may each be used in combination with a refrigerant except the unsaturated hydrofluorocarbon compound. Herein, a case in which the unsaturated hydrofluorocarbon compound is used in combination with the refrigerant except the unsaturated hydrofluorocarbon compound is, for example, a mixed refrigerant of a saturated hydrofluorocarbon compound and the unsaturated hydrofluorocarbon compound. Examples of the mixed refrigerant include: a mixed refrigerant of R32 and R1234yf; and a mixed refrigerant of R32, R1234ze, and R152a (AC5, its mixing ratio is 13.23:76.20:9.96).

The saturated hydrofluorocarbon compound is preferably a fluorinated product of an alkane having 1 to 4 carbon atoms, more preferably a fluorinated product of an alkane having 1 to 3 carbon atoms, still more preferably a fluorinated product of an alkane having 1 or 2 carbon atoms (methane or ethane). Examples of the fluorinated product of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125). Among them, difluoromethane and 1,1,1,2,2-pentafluoroethane are preferred.

Those saturated hydrofluorocarbon compounds may be used alone or in combination thereof. Herein, a case in which the saturated hydrofluorocarbon compounds are used in combination thereof is, for example, a mixed refrigerant obtained by mixing two or more kinds of saturated hydrofluorocarbon compounds each having 1 or more and 3 or less carbon atoms, or a mixed refrigerant obtained by mixing two or more kinds of saturated hydrofluorocarbon compounds each having 1 or more and 2 or less carbon atoms.

Examples of the mixed refrigerant include a mixture of R32 and R125 (R410A), a mixture of R125, R143a, and R134a (R404A), a mixture of R32, R125, and R134a (e.g., R407A, R407C, or R407E), and a mixture of R125 and R143a (R507A).

### <Natural Refrigerant>

The natural refrigerant is, for example, one or more kinds selected from the group consisting of: a hydrocarbon-based refrigerant (HC); carbon dioxide (CO₂); and ammonia, and is preferably a hydrocarbon-based refrigerant. Those refrigerants may be used alone or in combination thereof, or may each be combined with a refrigerant except the natural refrigerant. Herein, a case in which the natural refrigerant is used in combination with the refrigerant except the natural refrigerant is, for example, a mixed refrigerant of the natural refrigerant and a saturated hydrofluorocarbon compound and/or an unsaturated hydrofluorocarbon compound. A specific mixed refrigerant is, for example, a mixed refrigerant of carbon dioxide, R1234ze, and R134a (AC6, its mixing ratio is 5.15:79.02:15.41).

The hydrocarbon-based refrigerant is preferably a hydrocarbon having 1 to 8 carbon atoms, more preferably a hydrocarbon having 1 to 5 carbon atoms, still more preferably a hydrocarbon having 3 to 5 carbon atoms. A refrigerant having 8 or less carbon atoms is preferred as a refrigerant because the boiling point of the refrigerant does not become excessively high. Examples of the hydrocarbon-based refrigerant include methane, ethane, ethylene, propane (R290), cyclopropane, propylene, n-butane, isobutane (R600a), 2-methylbutane, n-pentane, isopentane, cyclopentane, isobutane, and normal butane.

The hydrocarbon-based refrigerants may be used alone or in combination thereof. In addition, each of the hydrocarbon-based refrigerants may be used as a single hydrocarbon-based refrigerant, or may be used as a mixed refrigerant by being mixed with a hydrofluorocarbon refrigerant such as R134a or with a refrigerant except the hydrocarbon-based refrigerant such as carbon dioxide.

In the composition for a refrigerator of this embodiment, with regard to the usage amounts of the refrigerant and the refrigerator oil composition, the mass ratio of the refrigerator oil composition to the refrigerant is preferably from 1/99 to 90/10, more preferably from 5/95 to 70/30. When the mass ratio of the refrigerator oil composition to the refrigerant is set within the ranges, lubricity and a suitable refrigerating capacity in a refrigerator can be obtained.

The composition for a refrigerator of this embodiment is preferably used in, for example, an air conditioner, a cold storage, a vending machine, a showcase, a refrigeration system, a hot water system, or a heating system. Examples of the air conditioner include: a car air conditioner, such as an open car air conditioner or an electric car air conditioner; and a gas heat pump (GHP) air conditioner.

### Examples

The present invention is specifically described by way of Examples below. However, the present invention is not limited to Examples below.

The kinds of respective components used in the preparation of refrigerator oil compositions of Examples and Comparative Examples are shown below.

### (1) Base Oil

A polyalkylene glycol (PAG) having a 40°C kinematic viscosity of 47.0 mm²/s was used as a base oil.

The 40°C kinematic viscosity was measured with a glass capillary viscometer in conformity with JIS K2283:2000.

### (2) Component (B)

- Phosphonic acid ester 1: dimethyl stearyl phosphonate (manufactured by Solvay, DURAPHOS 100)
- Phosphonic acid ester 2: diethyl stearyl phosphonate (manufactured by Johoku Chemical Co., Ltd., JC-390)
- Phosphonic acid ester 3: diethyl-3,5-di-t-butyl-4-hydroxybenzylphosphonate (manufactured by Johoku Chemical Co., Ltd., JC-356)

### (3) Extreme Pressure Agent for Comparison (Component (B'))

·Phosphonic acid ester 1': diethyl phenylphosphonate (manufactured by Johoku Chemical Co., Ltd., DEPP)
·Phosphonic acid ester 2': diethyl-4-methylbenzylphosphonate (manufactured by Johoku Chemical Co., Ltd., JC-243)
·TCP: tricresyl phosphate

### (4) Phenol-based Antioxidant

·DBPC: 2,6-di-t-butyl-4-methylphenol

### (5) Acid Scavenger

·Epoxy-based acid scavenger: 2-ethylhexyl glycidyl ether

### (6) Refrigerant

·R1234yf: 2,3,3,3-tetrafluoropropene

The structural formulae of the above-mentioned component (B) and component (B') are shown below.

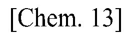

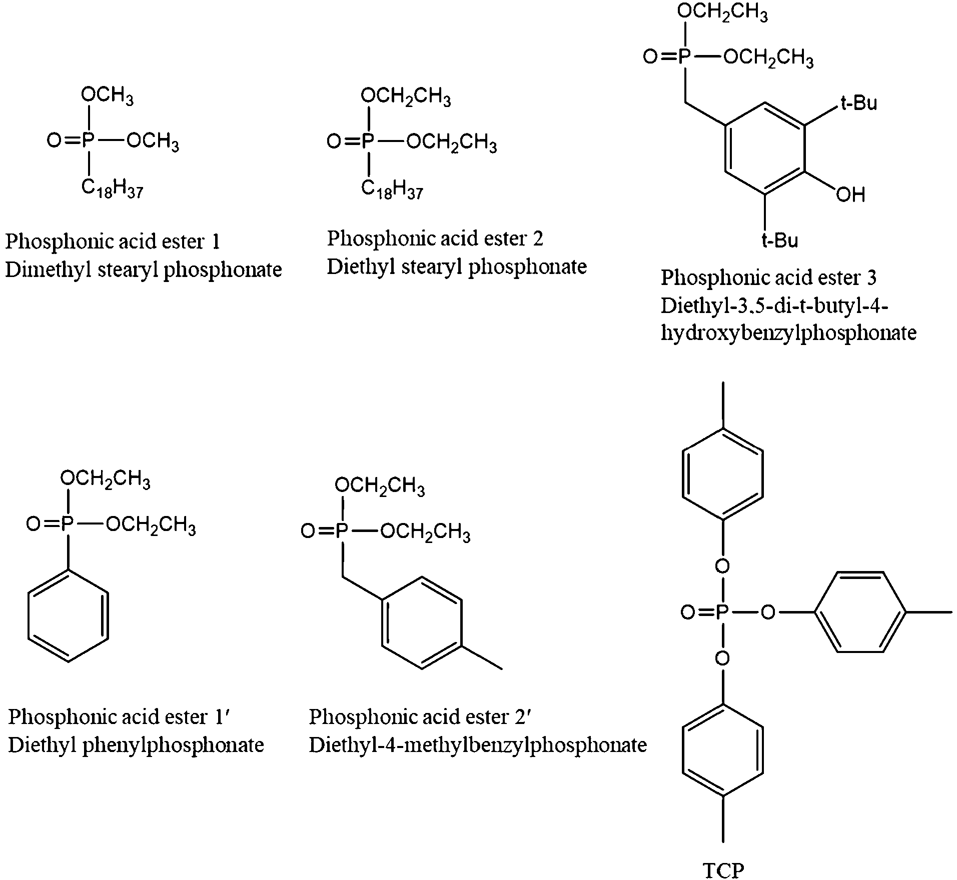

### [Examples 1 to 3 and Comparative Examples 1 to 3]

Refrigerator oil compositions each having composition shown in Table 1 were prepared, and were each evaluated for its wear resistance, seizure resistance, and heat stability by methods to be described later. Evaluation results are shown in Table 1.

The blending amounts of the component (B) and the component (B') in the respective refrigerator oil compositions were uniformized to such an amount that a phosphorus atom content became 840 ppm by mass with respect to a composition total amount.

### [Phosphorus Atom Content]

The phosphorus atom content was measured in conformity with JPI-5S-38-03.

### [Falex Test]

(1) The following products were prepared as a pin and a block.
   ·Pin: SAE3135
   ·Block: AISIC1137
(2) Wear Amount Measurement

The following test was performed with a closed Falex tester in conformity with ASTM D2670.

The pin and the block were set in the closed Falex tester, and 280 g of a refrigerator oil composition to be evaluated was introduced into a test vessel. After a pressure in the vessel had been reduced once, the refrigerant (R1234yf) was sealed therein until the pressure became 0.3 MPaG. The tester was operated for 60 minutes while its number of revolutions, oil temperature, and load were set to 290 rpm, 50°C, and 1,779 N, respectively, followed by the measurement of the wear amount (mg) of the pin and the block.

### (3) Seizure Load Measurement

The following test was performed with an open Falex tester in conformity with ASTM D3233.

The pin and the block were set in the tester, and the seizure load of a sample oil (refrigerator oil composition) was measured under the following conditions.
Running-in load: 1,112 N×1 minute
Number of revolutions: 290 rpm
Oil temperature: room temperature

### [Heat Stability]

Fe, Cu, and Al were loaded as catalysts into an autoclave vessel (volume: 200 ml), and a mixture of 20 g of the refrigerator oil composition obtained in each example and 20 g of the refrigerant (R1234yf) was loaded thereinto. In addition, 2,000 ppm by mass of water was loaded thereinto, and the mixture was held at 175°C for 336 hours, followed by the evaluation of the acid value (mgKOH/g) of the composition.

The acid value was measured in conformity with JIS K2501 by an indicator photometric titration method (see Appendix 1 in the JIS standard).

### [Table 1]

**Table 1**

| | | | Example | | | Comparative Example | | |
|---|---|---|---|---|---|---|---|---|
| | | | 1 | 2 | 3 | 1 | 2 | 3 |
| Blending composition (mass%) | Base oil (A) | PAG | 97.500 | 97.300 | 97.520 | 97.910 | 97.830 | 97.500 |
| | Component (B) | Phosphonic acid ester 1 | 1.000 | | | | | |
| | | Phosphonic acid ester 2 | | 1.200 | | | | |
| | | Phosphonic acid ester 3 | | | 0.980 | | | |
| | Component (B') | Phosphonic acid ester 1' | | | | 0.590 | | |
| | | Phosphonic acid ester 2' | | | | | 0.670 | |
| | | TCP | | | | | | 1.000 |
| | Phenol-based antioxidant | DBPC | 0.500 | 0.500 | 0.500 | 0.500 | 0.500 | 0.500 |
| | Acid scavenger | Epoxy-based acid scavenger | 1.000 | 1.000 | 1.000 | 1.000 | 1.000 | 1.000 |
| | Total | | 100.000 | 100.000 | 100.000 | 100.000 | 100.000 | 100.000 |
| Phosphorus atom content | | Derived from component (B) (mass ppm) | 840 | 840 | 840 | | | |
| | | Derived from component (B') (mass ppm) | | | | 840 | 840 | 840 |
| Evaluation result | Falex wear test | Wear amount (mg) | 2.3 | 1.7 | 0.4 | 6.0 | 8.9 | 6.5 |
| | | Seizure load (N) | 7,990 | 4,375 | 4,560 | 3,390 | 3,590 | 4,110 |
| | Heat stability | Acid value after test (mgKOH/g) | 1.30 | 0.89 | 0.93 | 1.13 | 1.05 | 1.48 |

As can be seen from Table 1, in each of the refrigerator oil compositions of Examples 1 to 3 each using the component (B), the wear amount was small, the seizure load was high, and the acid value after the heat stability test was suppressed to a relatively low value.

Meanwhile, in the phosphonic acid ester 1' used in Comparative Example 1, R³ in the general formula (1) represented a phenyl group, and in the phosphonic acid ester 2' used in Comparative Example 2, R³ represented a methylbenzyl group, that is, none of the groups had 9 or more carbon atoms. As a result, in each of the resultant refrigerator oil compositions, the wear amount was large and the seizure load was insufficient. Further, in the refrigerator oil composition of Comparative Example 3 using TCP, the wear amount was large, the seizure load was insufficient, and the acid value after the heat stability test became relatively large.

It is found from the foregoing results that the refrigerator oil composition of this embodiment is excellent in wear resistance and seizure resistance, and is also excellent in heat stability.

### Industrial Applicability

The refrigerator oil composition of this embodiment is excellent in wear resistance, seizure resistance, and heat stability. Accordingly, the composition may be suitably used in, for example, car air conditioners, such as an open car air conditioner and an electric car air conditioner, air conditioners, such as a room air conditioner and a packaged air conditioner, refrigeration systems, such as a gas heat pump (GHP), a freezer, a cold storage, a vending machine, and a showcase, and a hot water system and a heating system, such as a water heater and floor heating.

## Claims

1. A refrigerator oil composition, comprising:
a base oil (A); and
a phosphonic acid ester (B) represented by the following general formula (1): 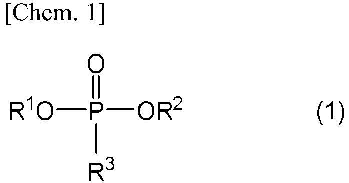 wherein R¹ and R² each independently represent a hydrocarbon group having 1 to 8 carbon atoms, and R³ represents a hydrocarbon group having 9 to 40 carbon atoms that may have a hydroxy group as a substituent.

2. The refrigerator oil composition according to claim 1, wherein a content of the phosphonic acid ester (B) is from 200 ppm by mass to 4,000 ppm by mass in terms of phosphorus atom with respect to a total amount of the refrigerator oil composition.

3. The refrigerator oil composition according to claim 1 or 2, wherein in the general formula (1), R¹ and R² each independently represent an alkyl group having 1 to 4 carbon atoms or an alkenyl group having 2 to 4 carbon atoms, and R³ represents a hydrocarbon group having 12 to 30 carbon atoms that may have a hydroxy group as a substituent.

4. The refrigerator oil composition according to any one of claims 1 to 3, wherein in the general formula (1), R³ represents a linear or branched alkyl group or alkenyl group having 14 to 24 carbon atoms, or a group represented by the following general formula (2): 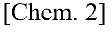 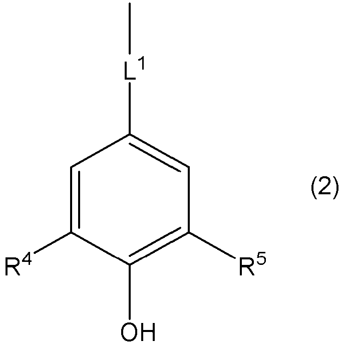 wherein L¹ represents a single bond, -CH₂-, or -CH₂CH₂-, and R⁴ and R⁵ each independently represent a hydrocarbon group having 2 to 10 carbon atoms.

5. The refrigerator oil composition according to any one of claims 1 to 4, wherein the base oil (A) contains one or more kinds selected from the group consisting of: a polyalkylene glycol (PAG); a polyvinyl ether (PVE); a polyol ester (POE); and a mineral oil.

6. The refrigerator oil composition according to any one of claims 1 to 5, further comprising an antioxidant (C).

7. The refrigerator oil composition according to any one of claims 1 to 6, further comprising an acid scavenger (D).

8. The refrigerator oil composition according to any one of claims 1 to 7, further comprising one or more kinds selected from the group consisting of: an oiliness improver; a copper deactivator; a rust inhibitor; an antifoaming agent; and a viscosity index improver.

9. A composition for a refrigerator, comprising:
the refrigerator oil composition of any one of claims 1 to 8; and
a refrigerant.

10. The composition for a refrigerator according to claim 9, wherein the refrigerant contains one or more kinds selected from the group consisting of: an unsaturated hydrofluorocarbon refrigerant; a saturated hydrofluorocarbon refrigerant; a hydrocarbon-based refrigerant; carbon dioxide; and ammonia.

11. The composition for a refrigerator according to claim 10, wherein the refrigerant contains an unsaturated hydrofluorocarbon compound.

12. A method of producing a refrigerator oil composition, comprising a step of mixing a base oil (A) and a phosphonic acid ester (B) represented by the following general formula (1): 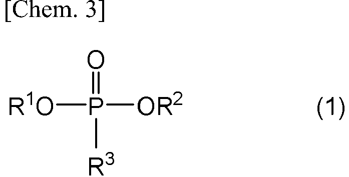 wherein R¹ and R² each independently represent a hydrocarbon group having 1 to 8 carbon atoms, and R³ represents a hydrocarbon group having 9 to 40 carbon atoms that may have a hydroxy group as a substituent.
